# EUROPÄISCHE PATENTSCHRIFT

(11) **EP 2 751 793 B1**
(45) Veröffentlichungstag und Bekanntmachung des Hinweises auf die Patenterteilung: **16.11.2016**
(21) Anmeldenummer: 11779354.7
(22) Anmeldetag: 30.09.2011
(51) Int. Cl.: G08B 13/24

(54) **BEWERTUNG DER SICHERHEITSLAGE IN EINEM GEBÄUDE MITTELS EINES FUNKTOMOGRAPHISCHEN ORTUNGS- UND DETEKTIONSVERFAHRENS UND MITTELS RFID-LESEGERÄTEN**
EVALUATION OF THE SECURITY SITUATION IN A BUILDING BY MEANS OF A RADIO TOMOGRAPHIC LOCATION AND DETECTION METHOD AND BY MEANS OF RFID READ DEVICES
ÉVALUATION DE LA SITUATION EN MATIÈRE DE SÉCURITÉ DANS UN BÂTIMENT AU MOYEN D'UN PROCÉDÉ DE LOCALISATION ET DE DÉTECTION RADIOTOMOGRAPHIQUE ET AU MOYEN DE LECTEURS RFID

(30) Priorität: 01.09.2011 EP 11179781
(43) Veröffentlichungstag der Anmeldung: 09.07.2014
(73) Patentinhaber: Siemens Schweiz AG, 8047 Zürich (CH)
(72) Erfinder: KONRAD, Hilmar, CH-6340 Baar (CH); WIESER, Dieter, CH-8700 Küsnacht (CH)
(74) Vertreter: Maier, Daniel Oliver
(86) Internationale Anmeldenummer: PCT/EP2011/067197
(87) Internationale Veröffentlichungsnummer: WO 2013/029693

(56) Entgegenhaltungen:
- WO-A1-2004/068432
- JP-A- 2009 014 646
- US-A1- 2003 197 612
- US-A1- 2011 075 635
- US-A1- 2011 195 701

## Beschreibung

Die Erfindung betrifft ein Verfahren zur Bewertung der Sicherheitslage in einem Gebäude, wobei das Gebäude Aufenthaltsbereiche mit Zugangsberechtigung für berechtigte Personen wie z.B. Büroräume, Forschungs- und Entwicklungsabteilungen, Verbindungsbereiche wie Flure, Treppenhäuser und Aufzüge sowie Ein- und Ausgänge aufweist. Ein solches Gebäude kann mehrere Etagen mit überwachungsbedürftigen Aufenthaltsbereichen aufweisen. Weiterhin betrifft die Erfindung geeignete Anwendungen des erfindungsgemässen Verfahrens.

Aus dem Stand der Technik sind allgemein Verfahren und Systeme zur Gebäudesicherung bekannt, bei welchen die Anwesenheit, das heisst die Präsenz von Personen, z.B. mittels Bewegungsmelder oder mittels Kameras mit nachgeschalteter Bildverarbeitung ermittelt wird.

Ein Ortungs- und Detektionsprinzip auf Basis der Funkfeldbeeinflussung durch anwesende menschliche Körper ist z.B. aus einem Beitrag auf dem 12. Kongress der Wireless Technologies, "Von der Technologie zur Anwendung", vom 22.- bis 23. September 2010 in Bochum, mit dem Titel "Funkbasierte Monitoring-Systeme zur Raumüberwachung", von Prof. Dr.-Ing. Stefan Witte et al., Lemgo, Germany, schriftlich veröffentlicht in den "Reihen der Fortschritt-Berichte VDI", ISBN 978-3-18-381010-9, Seiten 190 bis 198, bekannt. Bei den dort verwendeten Funkstationen handelt es sich um WLAN-Funkstationen, welche im Frequenzbereich um 2,45 GHz betrieben werden. Gerade diese Frequenz findet auch Verwendung beim Aufwärmen von wasserhaltigen Lebensmitteln in einem Mikrowellenherd, da diese Frequenz besonders gut von Wasser absorbiert wird. Da auch der menschliche Körper zum Grossteil aus Wasser besteht, erfolgt auch hier eine signifikante Absorption insbesondere von Funkwellen in diesem Frequenzbereich. Diese Absorption bewirkt dann eine Dämpfung, die auf der Empfängerseite bei einer im Funkschatten liegenden weiteren WLAN-Station als Rückgang der Empfangsfeldstärke oder des Empfangspegels detektierbar ist. Ein derartiges Verfahren wird auch als streuungsbasierte Funktomographie oder als RTI für "Radio Tomographic Imaging" bezeichnet.

In der Publikation "Radio Tomographic Imaging with Wireless Networks" von Joey Wilson und Neal Patwari, University of Utah, veröffentlicht im Tech Report am 16. September 2008, ist eingehend das Verfahren und der Aufbau eines solchen Netzwerks beschrieben.

Aus der DE 10 2007 001 225 A1 ist ferner ein sensitiver Fussboden bekannt, der eine Vielzahl von rasterförmig verlegten Flächenverkleidungselementen aufweist, die ihrerseits mehrere Sensorflächen aufweisen. Die Sensorflächen sind sensitiv auf Druck und zugleich sensitiv auf die Anwesenheit eines elektrisch polarisierbaren Körpers, wie z.B. eines Schuhs, in unmittelbarer Nähe zum Flächenverkleidungselement. Durch Auswerten der jeweiligen Sensorsignale ist die Anzahl von Personen sowie deren Bewegungsrichtung in einem entsprechenden Fussbodenbereich ermittelbar.

Aus dem Stand der Technik sind weiterhin Identifikationsverfahren mit berührungslos arbeitenden Kennungen bekannt. Derartige Kennungen sind z.B. elektronische Ausweise oder "Badges" mit integrierten RFID-Transpondern. Letztere können durch entsprechende RFID-Lesegeräte ausgelesen und datentechnisch zur Sicherheitsüberprüfung auf Zugangsberechtigung an eine Zentrale weitergeleitet werden.

Ausgehend von dem eingangs genannten Stand der Technik ist es eine Aufgabe der Erfindung, ein erweitertes Verfahren und ein erweitertes System zur Bewertung der Sicherheitslage in einem Gebäude mit Aufenthaltsbereichen mit Zugangsberechtigung anzugeben.

Es ist eine weitere Aufgabe der Erfindung, geeignete Anwendungen des erfindungsgemässen Verfahrens sowie eine Funkstation für ein derartiges System anzugeben.

Die Aufgabe der Erfindung wird durch die Gegenstände der unabhängigen Ansprüche gelöst. Vorteilhafte Verfahrensvarianten und Ausführungsformen der vorliegenden Erfindung sind in den abhängigen Ansprüchen angegeben.

Gemäss der Erfindung wird eine (blosse) aktuelle Anzahl physisch anwesender Personen in zumindest einem Teilbereich der Aufenthaltsbereiche ermittelt wird, indem in einem Funknetzwerk, welches mehrere im Decken-, Wand- oder Bodenbereich verteilt angeordnete Funkstationen aufweist, die Funkfeldbeeinflussung dieser Funkstationen untereinander durch dort anwesende Personen ausgewertet wird, insbesondere mittels einer streuungsbasierten Funktomographie. Es wird jeweils eine aktuelle Anzahl von Identifikationskennungen ermittelt, welche mittels RFID-Lesegeräten von RFID-Transpondern ausgelesen werden, wobei die Identifikationskennungen bestimmungsgemäss von berechtigten Personen mitgeführt werden. Die RFID-Lesegeräte sind dort gleichfalls im Decken-, Wand- oder Bodenbereich verteilt angeordnet. Es wird auf Basis der jeweiligen Personenidentifikationskennungsanzahlen und der aktuell ermittelten Personenanzahl ein Indikator zur Bewertung der aktuellen Sicherheitslage im Gebäude ermittelt und ausgegeben.

Gemäss der Erfindung ist auf der Basis verteilt angeordneter Funkstationen eine Ortung bzw. eine Ermittlung der Anzahl anwesender Personen über eine nachgeschaltete, übergeordnete Signalverarbeitung und Auswertung der jeweiligen Empfangsfeldstärken der Funkstationen möglich.

Hierbei sendet z.B. reihum immer eine der Funkstationen, während die verbleibenden Funkstationen des Funknetzwerkes auf Empfang schalten und dann den jeweiligen Funkfeldstärkewert ermitteln. Übergeordnet erfolgt dann die Ortsbestimmung innerhalb des Funknetzwerkes mittels des funktomograhischen Verfahrens. Alternativ kann jeweils eine Funkstation in einem verschiedenen Frequenzkanal, insbesondere in einem verschiedenen Frequenzkanal des 2,45 GHz-ISM-Frequenzbandes senden, während die verbleibenden anderen Funkstationen für sämtliche hierzu das funktomographische Verfahrens verwendeten Frequenzkanäle die jeweiligen Funkfeldstärkewerte ermitteln. Übergeordnet erfolgt dann wiederum die Ortsbestimmung innerhalb des Funknetzwerkes mittels des funktomograhischen Verfahrens.

Durch die gleichzeitige Erfassung der physischen Anwesenheit von Personen sowie deren Identifikation ist vorteilhaft die Anwesenheit von nichtausgewiesenen Personen oder von Personen mit nicht gültiger Identifikationskennung sowie deren Standort im Gebäude detektierbar und nachverfolgbar. Dabei sind keine gesonderten Zugangsbarrieren wie Drehkreuze, Schleusen und dergleichen mehr erforderlich. Vielmehr ist durch eine nachverfolgende gleichzeitige Erfassung der Personenanwesenheit und ggf. deren Identifikation ein Annähern einer mittels des RFID-Transponders nicht ausgewiesenen Person oder einer Person mit als ungültig erkannten Identifikationskennung an einen Aufenthaltsbereich mit Zugangsberechtigung detektierbar. In einem solchen Fall kann z.B. Sicherheitspersonal an diesen Aufenthaltsbereich mit Zugangsberechtigung hinbeordert werden. Selbiges ist der Fall, wenn eine an sich berechtigte Person mit Zugangsberechtigung für einen Grossteil der Aufenthaltsberechtigung sich einem Aufenthaltsbereich mit besonderer Zugangsberechtigung nähert, für welche diese Person keine gültige Identifikationskennung für den Zugang aufweist.

Die Aufenthaltsbereiche mit Zugangsberechtigung sind insbesondere Büroräume, Forschungs- und Entwicklungsabteilungen, Verbindungsbereiche wie Flure, Treppenhäuser und Aufzüge sowie Ein- und Ausgänge des Gebäudes. Es ist prinzipiell keine durchgehende flächenmässige Überwachung bzw. ein durchgehendes Nachverfolgen der physischen Anwesenheitserfassung der Personen sowie eine durchgehende flächenmässige Erfassung der Identifikationskennungen erforderlich. Es können z.B. auch reine Verbindungsgänge, Treppenhäuser oder Betriebsräume ohne zusätzliche weitere Ein- und Ausgänge ausgespart bleiben. Selbiges trifft auf Aufenthaltsbereiche zu, die generell keine Zugangsberechtigung erfordern, wie z.B. Foyers, Kantinen oder Warteräume. Somit kann ein Gebäude sich flickenteppichartig aus Aufenthaltsbereichen mit Zugangsberechtigung und Aufenthaltsbereichen ohne erforderliche Zugangsberechtigung zusammensetzen. Auch ist es vorstellbar, dass bei den Aufenthaltsbereichen mit Zugangsberechtigung nur die Identifikationskennungen erfasst werden.

Vorteilhaft ist es besonders, wenn die Aufenthaltsbereiche ohne Zugangsberechtigung zumindest teilweise nur auf die Anwesenheit von Personen und ggf. auf deren Weiterbewegung hin überwacht werden. Dadurch kann sozusagen eine auf physische Anwesenheit erfasste und nachverfolgte Person mit zugeordneter erfasster gültiger Identifikationskennung durch einen Aufenthaltsbereich ohne Zugangsberechtigung mit alleiniger Überwachung auf physischer Anwesenheit hindurch an einen weiteren Aufenthaltsbereich mit Zugangsberechtigung weitergereicht werden. Vorzugsweise wird übergeordnet, wie z.B. etagenweise oder bereichsweise, die Anzahl aller physisch erfassbaren Personen fortlaufend ermittelt. Selbiges gilt für die fortlaufende Ermittlung der Anzahl aller kontaktlos auslesbaren Identifikationskennungen von den RFID-Transpondern.

Mit Sicherheitslage ist in erster Linie der Gefährdungsgrad von Unternehmen, öffentlichen Einrichtungen sowie von Personen oder Personengruppen durch unbefugte Personen gemeint mit dem möglichen Ziel, in den Besitz von vertraulichen oder geheimen Dokumenten, von Unterlagen oder elektronischen Dokumenten und Daten zu gelangen.

Mit der Erfassung der "blossen" aktuellen Anzahl physisch anwesender Personen ist lediglich die Erfassung der ganzzahligen Anzahl von Personen gemeint. Insbesondere ist mit dem Verfahren kein biometrisches Verfahren gemeint, welches Rückschlüsse auf die Identität der jeweiligen Personen ermöglicht bzw. ermöglichen könnte.

Mit RFID-Transponder sind insbesondere aktive und passive RFID-Transponder gemeint. Aktive RFID-Transponder senden eine jeweilige im Transponder elektronisch gespeicherte Identifikationskennung (ID) durch Aussenden von elektromagnetischen Wellen aus. Vorzugsweise senden die aktiven RFID-Transponder in einem ISM-Frequenzband, insbesondere im UHF-Frequenzbereich, d.h. im Mikrowellenbereich mit Frequenzen von 300 MHz bis 3 GHz. Bei den passiven RFID-Transpondern kann es sich um induktiv gekoppelt auslesbare RFID-Transponder, wie z.B. im Frequenzbereich von 13,56 MHz, oder um passive UHF-Transponder handeln, welche lediglich die Impedanz der Transponderantenne mit der Identifikationskennung modulieren, ohne selbst elektromagnetische Wellen auszusenden.

RFID-Transponder können z.B. in einem Ausweis im Chipkartenformat, in einem Schlüssel, in einem Etikett, in einem Etui, in einer Tasche, in einer Uhr oder dergleichen integriert sein.

Mit Indikator ist vorzugsweise ein Zahlenwert gemeint, dessen numerischer Wert ein Mass für die vorliegende, bewertete Sicherheitslage ist. Der Zahlenwert 0 kann z.B. die Sicherheitslage in einem Gebäude mit "ungefährdet" oder "sicher" anzeigen. Steigende Zahlenwerte können z.B. einen steigenden Gefährdungsgrad der Sicherheitslage anzeigen. Der Indikator kann auch eine sich ändernde Farbe sein, wie z.B. grün für keine Gefährdung, rot für hohe Gefährdung, sowie gelb oder orange für dazwischen liegende Gefährdungsstufen. Er kann auch eine Folge von sich je nach Gefährdungsgrad ändernden Symbolen sein, wie z.B. ein Gefahrenzeichen oder ein "OK"-Symbol. Er kann auch eine Buchstabenfolge oder eine Folge unterschiedlicher akustischer Signale sein.

Typischerweise stimmen der Standort einer physisch erfassten Person sowie der Standort eines von der Person mitgeführten, ausgelesenen RFID-Transponders zumindest in etwa überein. Erst für den Fall, dass die Anzahl der physisch erfassten Personen nicht mit der Anzahl der erfassten, ausgelesenen RFID-Transponder übereinstimmt, wird ein geänderter Indikator ausgegeben, welcher eine Verschlechterung der Sicherheitslage anzeigt. Dies ist z.B. dann der Fall, wenn eine Person, wie z.B. ein Besucher, keinen RFID-Transponder oder einen RFID-Transponder mit ungültiger Identifikationskennung mit sich führt. Selbiges ist der Fall, wenn z.B. ein RFID-Transponder liegen geblieben ist. Auch hier stimmt die Zahl der physisch erfassten Personen nicht mit der Anzahl von erfassten Identifikationskennungen überein. Die Änderung dieser Sicherheitslage kann gleichfalls durch einen geänderten Indikator ausgegeben werden.

Der Indikator kann z.B. durch einen übergeordneten Leitstellenrechner ermittelt und z.B. auf einem Display ausgegeben werden, wie z.B. durch Erhöhung einer "Gefährdungszahl" oder durch Änderung der Farbe eines Sicherheitssymbol von grün (für keine Gefährdung) zu rot (für Gefährdung liegt vor).

Nach einer Verfahrensvariante wird übergeordnet eine aktuelle Gesamtpersonenanzahl auf Basis der Funkfeldbeeinflussung durch anwesende Personen in mehreren, insbesondere sich überlappenden Funknetzwerken ermittelt. Es wird übergeordnet eine aktuelle Gesamtidentifikationskennungsanzahl auf Basis aller dort erfassbaren Identifikationskennungen ermittelt wird. Dadurch ist eine flächenmässig weitergehende Bewertung der Sicherheitslage vorteilhaft möglich. Diese kann z.B. mehrere oder sämtliche Stockwerke in einem Gebäude und/oder mehrere zusammengehörende Gebäude eines Hauptgebäudes oder Gebäudekomplexes sein.

Einer weiteren Verfahrensvariante zufolge wird als Indikator für die Sicherheitslage fortlaufend die Differenz zwischen den beiden Anzahlen und/oder zwischen den beiden Gesamtanzahlen ermittelt. Gegebenenfalls wird eine Meldung oder eine Warnung ausgegeben, wenn die jeweilige Differenz einen vorgegebenen Vergleichswert übersteigt.

Die Differenz kann dabei positive oder negative Werte annehmen, je nachdem, ob die Personenanzahl grösser oder kleiner ist als die Anzahl der Identifikationskennungen, wobei der Fall, dass die Personenanzahl grösser ist als die Anzahl der Identifikationskennungen hinsichtlich der Sicherheit als kritischer einzuschätzen ist. Im einfachsten Fall wird nur der Betrag der jeweiligen Differenz gebildet.

Der Vergleichswert kann z.B. den Wert 0, 1, 2 oder 3 aufweisen. Die Meldung oder Warnung kann z.B. eine Email oder eine Textmeldung, wie z.B. eine SMS, oder eine Pagermitteilung sein. Die jeweilige Differenz ist dabei ein Mass für die Abweichung der physisch erfassten Personen zu den erfassten Identifikationskennungen. Dabei kann der Indikator mit zunehmender Abweichung bzw. Differenz einen zunehmenden Zahlenwert aufweisen, welcher eine zunehmende Verschlechterung der Sicherheitslage repräsentiert. Die Differenz aus der aktuellen Gesamtpersonenanzahl und der aktuellen Gesamtidentifikationskennungsanzahl gibt hierbei einen Gesamtüberblick über die Sicherheitslage an, die durchaus von einer "lokalen" Differenz aus der aktuellen Personenanzahl und der aktuellen Identifikationskennungsanzahl in einem der Aufenthaltsbereiche unterschiedlich sein kann.

Einer weiteren Verfahrensvariante zufolge wird der jeweilige Standort der physisch anwesenden Personen in einem Funknetzwerk und/oder der jeweilige Standort der ausgelesenen RFID-Transponder ermittelt und ausgegeben. Die Ausgabe kann z.B. auf einem grafisch nachgebildeten Flurplan des Gebäudes visualisiert werden. Dadurch sind Standortdiskrepanzen zwischen dem Standort physisch anwesender Personen und dem jeweiligen Standort erfasster Identifikationskennungen unmittelbar erkennbar. Visuelle Bewegungen von physisch anwesend erfassten und als solche gekennzeichneten Personen, losgelöst von den Bewegungen erfasster Identifikationskennungen, sind somit ein Indiz für das Vorliegen einer Sicherheitsverletzung bzw. für das Vorliegen einer Verschlechterung der Sicherheitslage. Selbiges trifft zu, wenn visuelle Bewegungen von erfassten und als solche gekennzeichnete Identifikationskennungen losgelöst von den Bewegungen erfasster physisch anwesender Personen sind.

Ein weiterer Vorteil ist, dass auf Basis dieser Standortinformationen eine gezielte Evakuierung des Gebäudes in einem gemeldeten Brandfall möglich ist. Mit anderen Worten ist eine priorisierte Evakuierung von Aufenthaltsbereichen mit hoher Personendichte durch die angeforderten Einsatzkräfte möglich.

Nach einer Verfahrensvariante übernehmen zumindest ein Teil der jeweiligen Funkstationen eines Funknetzwerkes zugleich die Funktion eines RFID-Lesegeräts mit. Dadurch reduziert sich der technische Gesamtaufwand erheblich.

Vorzugsweise sind die jeweiligen Funkstationen dazu eingerichtet, zur Ermittlung der Anzahl der im Funknetzwerk physisch anwesenden Personen in einem Mikrowellenfrequenzbereich zu senden, insbesondere in einem Frequenzbereich um 2,45 GHz. Dieser Frequenzbereich ist wegen der vergleichsweise hohen Funkabsorption durch den menschlichen Körper besonders gut geeignet.

Nach einer weiteren Verfahrensvariante sind die jeweiligen Funkstationen dazu eingerichtet, zum kontaktlosen Auslesen von RFID-Transpondern in einem Mikrowellenfrequenzbereich zu senden, insbesondere in einem ISM-Frequenzbereich um 2,45 GHz, um 5,8 GHz, um 433 MHz, um 868 MHz oder um 915 MHz.

Vorzugsweise liegt der Frequenzbereich um 2,45 GHz, der zugleich auch ein freies ISM-Frequenzband für RFID-Anwendungen ist. Der Betrieb der Funktion "RFID" und "Funktomographie" kann dabei im Zeitmultiplex erfolgen. Es ist auch vorstellbar, dass in einem der vielen Frequenzkanäle des ISM-Frequenzbandes das Auslesen des jeweiligen RFID-Transponders erfolgt und in zumindest einem der anderen Frequenzkanäle die Funktomographie durchgeführt wird.

Nach einer weiteren vorteilhaften Verfahrensvariante ist zumindest ein Teil der Funkstationen zugleich eine WLAN-Funkstation, eingerichtet zum Sende- und Empfangsbetrieb insbesondere im 2,45 GHz-Frequenzband oder im 5 GHz-Frequenzband. Dadurch ist neben der funktomographischen Personenanwesenheitserfassung und dem Auslesen der von den jeweiligen Personen mitgeführten RFID-Transponder zugleich ein Betrieb eines drahtlosen Funkdatennetzwerkes möglich. Der Begriff "WLAN" ist hier stellvertretend zu sehen für sämtliche, vorzugsweise standardisierte Funkdatennetzwerke, über welche insbesondere mobile Geräte, wie z.B. Notebooks oder Smartphones Daten austauschen können, wie z.B. über das Internet oder Intranet.

Weiterhin nach einer vorteilhaften Verfahrensvariante weist die jeweilige WLAN-Funkstation zugleich die Funktion eines Routers zum Weiterleiten von Funkdaten an zumindest eine in Funkreichweite befindliche weitere WLAN-Funkstation und/oder an einen in Funkreichweite befindlichen weiteren WLAN-Router auf.

Das erfindungsgemässe Verfahren ist vorteilhaft zum Detektieren und Lokalisieren von Personen mit fehlender oder nicht auslesbarer Identifikationskennung anwendbar. Dadurch wird die Sicherheitslage in einem Gebäude deutlich verbessert.

Das erfindungsgemässe Verfahren ist vorteilhaft auch zum Detektieren und Lokalisieren von kontaktlos ausgelesenen RFID-Transpondern mit ungültiger Identifikationskennung anwendbar. Auch dadurch wird die Sicherheitslage in einem Gebäude deutlich verbessert.

Die Aufgabe der Erfindung wird weiterhin durch eine mit dem erfindungsgemässen Verfahren korrespondierende Funkstation zum Betrieb in einem Funknetzwerk mit weiteren Funkstationen gelöst. Die Funkstation ist hierbei zum Senden und zum Empfangen von Funksignalen eingerichtet. Sie weist eine erste Datenschnittstelle zum Ausgeben eines aktuellen Empfangsfeldstärkewertes der Funkstation auf. Sie ist zugleich zum kontaktlosen Auslesen von Identifikationskennungen von sich im Funkerfassungsbereich der Funkstation befindlichen RFID-Transpondern im Sinne eines RFID-Lesegeräts eingerichtet. Schliesslich ist die Funkstation zum Ausgeben der erfassten Identifikationskennungen und/oder der aktuellen Anzahl der Identifikationskennungen an der ersten Datenschnittstelle eingerichtet.

Unabhängig von der gemachten Erfindung kann die Funkstation nur zum Funkempfang eingerichtet sein, wobei die Funkstation einen jeweiligen Empfangsfeldstärkewert an einer funkgestützten und/oder kabelgebundenen Datenschnittstelle ausgibt. Vorzugsweise ist die Funkstation zum Empfang im Mikrowellenfrequenzbereich, insbesondere im 2,45 GHz-Frequenzband, wie z.B. im Bereich von 2,4 bis 2,5 GHz, eingerichtet. Der an der Datenschnittstelle ausgegebene Empfangsfeldstärkenwert kann dann übergeordnet zur Durchführung eines funktomographischen Verfahrens, wie zuvor beschrieben, verwendet werden. Der Funkstation kann in ihrer Funktion in einen Gefahrenmelder, wie z.B. in einen Brand- oder Rauchmelder, integriert sein. Die Funkstation kann in einem Gehäuse untergebracht sein, welches in der Formgebung an das eines Brand- oder Rauchmelders angelehnt ist. Eine derartige Funkstation bzw. ein derartiger Brand- oder Rauchmelder mit der zuvor beschriebenen Funkempfangsfunktionalität kann dazu eingerichtet sein, an einer gemeinsamen Datenschnittstelle sowohl den aktuellen Empfangsfeldstärkewert wie auch Brand- oder Rauchmelderdaten auszugeben, wie z.B. auf einen kabelgebundenen Brandmelderbus, über den auch die Energieversorgung bewerkstelligt werden kann. Eine derartige Funkstation bzw. ein derartiger Brand- oder Rauchmelder mit der zuvor beschriebenen Funkempfangsfunktionalität kann zusätzlich dazu eingerichtet sein, eine Identifikationskennung von aktiv sendenden RFID-Transpondern zu empfangen und diese z.B. zusammen mit den anderen Daten an der Datenschnittstelle auszugeben. Eine derartige Funkstation kann auch als Bewegungsmelder realisiert sein oder als ein solcher betrachtet werden.

Die Funkstation kann gemäss der Erfindung eine WLAN-Funkstation sein und eine zweite Datenschnittstelle zum Empfang von zu sendenden Funkdaten und zum Ausgeben von empfangenen Funkdaten an der zweiten Datenschnittstelle im Sinne eines "WLAN-Hotspots" aufweisen. Die zweite Datenschnittstelle kann an einen Internet-Netzwerkknoten oder Intranet-Netzwerkknoten anschliessbar sein, wie z.B. über eine LAN-Datenschnittstelle.

Nach einer weiteren Ausführungsform weist die Funkstation eine dritte Datenschnittstelle auf. Sie weist zudem eine Detektionseinheit zur Detektion von Rauch-, Rauch- oder Brandgaspartikeln und zur Ausgabe eines von der Detektionseinheit gebildeten Detektionswertes und/oder einer daraus abgeleiteten Messgrösse als Mass für die Konzentration von detektierten Rauch-, Brand- oder Brandgaspartikeln und/oder zum Ausgeben einer daraus abgeleiteten Alarm- oder Warnmeldung an der dritten Datenschnittstelle auf.

Schliesslich wird die Aufgabe der Erfindung durch ein entsprechendes System zur Bewertung der Sicherheitslage in einem Gebäude gelöst, wobei das Gebäude Aufenthaltsbereiche mit Zugangsberechtigung für berechtigte Personen aufweist. Das System weist eine Mehrzahl der zuvor genannten Funkstationen auf, wobei diese Funkstationen Teil eines Funknetzwerkes sind. Das System weist eine übergeordnete, signal- oder datentechnisch mit den Funkstationen verbundene Zentrale auf. Die Zentrale ist dazu eingerichtet, auf Basis der von den jeweiligen Funkstationen empfangenen Identifikationskennungen eine aktuelle Anzahl von Identifikationskennungen zu ermitteln, auf Basis der von den jeweiligen Funkstationen empfangenen Empfangsfeldstärkewerten, insbesondere mittels eines funktomographischen Ortungs- und Detektionsverfahrens, eine aktuelle Personenanzahl physisch anwesender Personen zu ermitteln, mittels einer streuungsbasierten Funktomographie eine aktuelle Personenanzahl zu ermitteln, und auf Basis dieser beiden Anzahlen einen Indikator zur Bewertung der aktuellen Sicherheitslage im Gebäude zu ermitteln und auszugeben.

Nach einer Ausführungsform des Systems ist die Zentrale dazu eingerichtet, als Indikator für die Sicherheitslage fortlaufend die Differenz zwischen den beiden Anzahlen zu ermitteln und gegebenenfalls eine Meldung auszugeben, wenn die jeweilige Differenz einen vorgegebenen Vergleichswert übersteigt.

Einer weiteren Ausführungsform zufolge ist die Zentrale dazu eingerichtet, eine weitere Meldung auszugeben, wenn die Anzahl der als ungültig erkannten Identifikationskennungen einen vorgegebenen weiteren Vergleichswert übersteigt.

Gemäss einer weiteren Ausführungsform ist die Zentrale dazu eingerichtet, einen jeweiligen Standort der physisch anwesenden Personen und/oder den jeweiligen Standort der ausgelesenen RFID-Transponder zu ermitteln und auszugeben.

Einer weiteren Ausführungsform zufolge weist das System zusätzlich eine mit den Funkstationen signal- oder datentechnisch verbundene Gefahrenmeldezentrale auf, wobei die Gefahrenmeldezentrale zur übergeordneten Erfassung des von den jeweiligen Funkstationen mit "Brandmelderfunktionalität" übermittelten Detektionswertes und/oder der daraus abgeleiteten Alarm- oder Warnmeldung eingerichtet ist. Die übergeordnete Zentrale und die Gefahrenmeldezentrale können dabei eine gemeinsame Zentrale als Baueinheit bilden.

Schliesslich weist das System nach einer vorteilhaften Ausführungsform eine Mehrzahl von WLAN-Funkstationen auf, wobei die WLAN-Funkstationen ein WLAN-Funknetzwerk mit Routerfunktion bilden und wobei zumindest eine der WLAN-Funkstationen datentechnisch mit einem Internet- und/oder Intranet-Netzwerk verbunden ist.

Die Erfindung sowie vorteilhafte Ausführungen der vorliegenden Erfindung werden am Beispiel der nachfolgenden Figuren erläutert. Dabei zeigen
- FIG 1: ein Ablaufdiagramm für das Prinzip des erfindungsgemässen Verfahrens,
- FIG 2: ein Beispiel für eine räumliche Anordnung von Funkstationen eines Funknetzwerks in einer Draufsicht auf einen Aufenthaltsbereich,
- FIG 3: ein Beispiel für ein System gemäss der Erfindung mit einer verteilten Anordnung von Funkstationen im Deckenbereich,
- FIG 4: den Aufbau einer beispielhaften Funkstation gemäss FIG 3 in der Funktion als RFID-Lesegerät und als Teil eines Ortungs- und Detektionssystems für Personen auf Basis von Funkfeldbeeinflussungen,
- FIG 5: den Aufbau einer beispielhaften erfindungsgemässen Funkstation gemäss einer zweiten Ausführungsform, und
- FIG 6: den Aufbau einer beispielhaften erfindungsgemässen Funkstation gemäss einer dritten Ausführungsform.

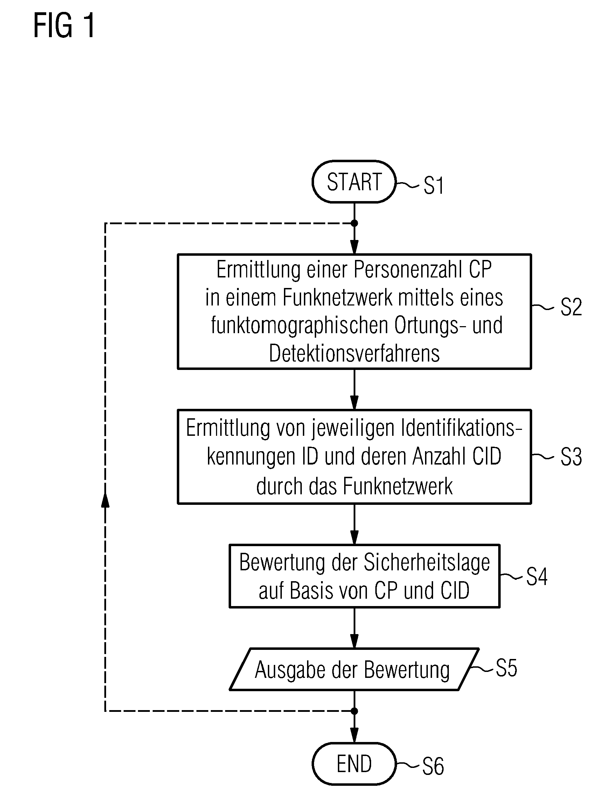

FIG 1 zeigt ein Ablaufdiagramm für das Prinzip des erfindungsgemässen Verfahrens.

Mit dem Bezugszeichen S1 ist ein Startschritt für die Bewertung der Sicherheitslage in einem Gebäude bezeichnet, wobei ein solches Gebäude Aufenthaltsbereiche mit Zugangsberechtigung für entsprechend berechtigte Personen aufweist.

Im Schritt S2 wird mittels eines funktomographischen Ortungs- und Detektionsverfahrens automatisiert die aktuelle Anzahl CP physisch anwesender Personen in zumindest einem Teilbereich der Aufenthaltsbereiche ermittelt.

Im folgenden Verfahrensschritt S3 werden in dem zumindest einen Teilbereich automatisiert Identifikationskennungen von kontaktlosen, von den jeweiligen berechtigten Personen mitgeführten RFID-Transpondern ausgelesen. Dabei wird die aktuelle Anzahl CID erfasster Identifikationskennungen ermittelt.

Im letzten Schritt S4 wird dann auf Basis der beiden Anzahlen CP, CID ein Indikator zur Bewertung der aktuellen Sicherheitslage im Gebäude gebildet.

Im Schritt S5 erfolgt die Ausgabe der ermittelten Bewertung.

Mit S6 ist der Endschritt des erfindungsgemässen Verfahrens bezeichnet.

Ergänzend wird angemerkt, dass die Reihenfolge der beiden Verfahrensschritte S2, S3 auch umgekehrt sein kann. Die auf den zweiten Schritt S2 zurückgeführte, gestrichelt dargestellte Verzweigung soll verdeutlichen, dass die Schritte S2 bis S5 fortlaufend wiederholt werden können, um immer aktuell die Sicherheitslage bewerten zu können.

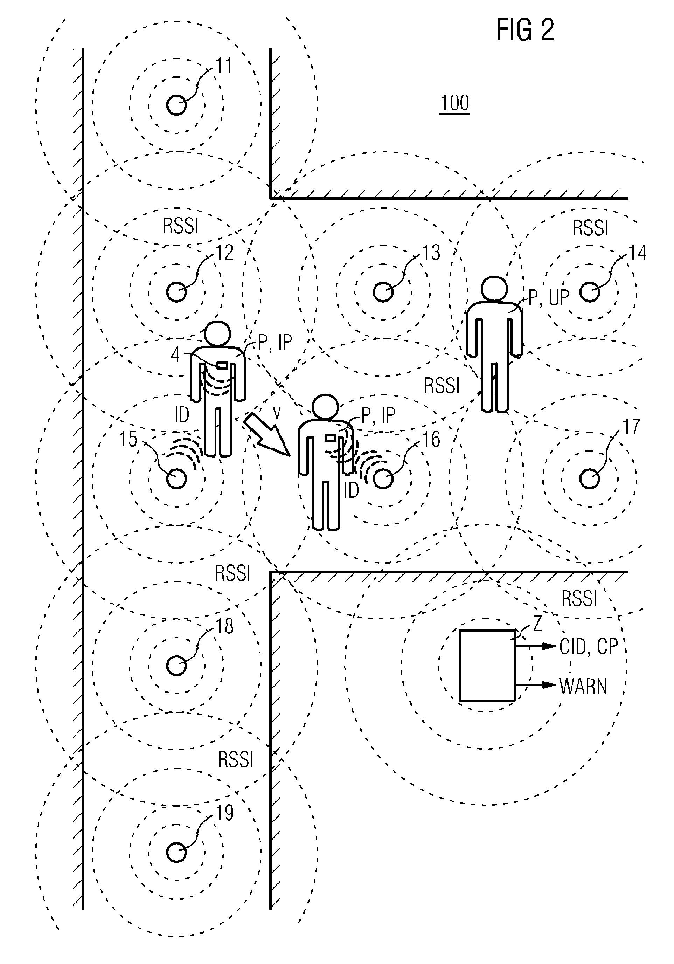

FIG 2 zeigt ein Beispiel für eine räumliche Anordnung von Funkstationen 11-17 eines Funknetzwerks in einer Draufsicht auf einen Aufenthaltsbereich. Die gezeigten Funkstationen 11-17 müssen nicht, wie gezeigt, im Deckenbereich verteilt angeordnet sein. Sie können z.B. im Fussleistenbereich oder auf "halber" Höhe entlang der Gebäudewände angeordnet sein. Die Funkstationen 11-17 können über ein gemeinsames, leitungsgebundenes Buskabel an eine übergeordnete Zentrale Z angeschlossen sein. Sie können alternativ oder zusätzlich, wie in der FIG 2 gezeigt, selbst über Funk mit einer funkfähigen Zentrale Z verbunden sein. Die jeweiligen Funkstationen 11-17 leiten dabei die von angrenzenden, in einem gemeinsamen überlappenden Funkbereich angeordneten Funkstationen 11-17 stammende Daten ID, RSSI sowie die selbst erfassten Daten ID, RSSI gegebenenfalls über weitere Funkstationen 11-17 im Sinne einer Routers weiter an die Zentrale Z.

In der FIG 2 ist dargestellt, wie sich in der Bilddarstellung eine Person P schräg nach rechts unten mit einer Geschwindigkeit v bewegt. Sie bewegt sich dabei in dem von dem Funknetzwerk ausgesandten Funkfeld und beeinflusst dieses durch Absorptions-, Dämpfungs-, Beugungs- und Streuungseffekte durch seinen Körper. Die Funkfeldbeeinflussungen äussern sich in einer jeweiligen Änderung der Empfangfeldstärke bei den Funkstationen 11-17. Einen Indikator für die Empfangsfeldstärke stellt z.B. der sogenannte, aus der WLAN-Technik bekannte RSSI-Wert (für Received Signal Strength Indication) dar, welcher Werte von 0 bis 255 annehmen kann, wobei der Wert 255 der maximal möglichen Empfangsfeldstärke entspricht. Die Beeinflussung des gesamten überlagerten Funkfeldes ist somit ein Mass für die Beeinflussung durch Personen, welche sich in der Nähe bzw. zwischen der sendenden Funkstation 11-17 und einer oder mehrerer empfangenden Funkstationen 11-17 befinden.

Die Geschwindigkeit v, mit der sich die Person P bewegt, macht sich zudem in einer Frequenzverschiebung bei der Empfangsfrequenz bei der jeweiligen Funkstation 11-17 bemerkbar. Die Frequenzverschiebung beruht hierbei auf dem Dopplereffekt, der zu einer Phasenverschiebung durch die sich bewegenden Personen P führt, und kann gleichfalls bei der Auswertung der jeweiligen Empfangsfeldstärkewerte RSSI durch die Zentrale Z mit ausgewertet werden. Dadurch ist auch die Bewegungsrichtung und deren Geschwindigkeit v mit höherer Genauigkeit rechnerisch ermittelbar. Es können aber auch die jeweiligen Funkstationen 11-17 derart eingerichtet oder konfiguriert sein oder auch derart durch die übergeordnete Zentrale angesteuert werden, dass sie die Frequenzverschiebung "selbst" ermitteln und einen entsprechenden Datenwert, wie z.B. ein Δf, an ihrer Datenschnittstelle ausgeben.

Die Funkstationen 11-17 können derart konfiguriert sein oder über die Zentrale Z derart angesteuert werden, dass z.B. immer eine der Funkstationen 11-17 sendet, während die anderen Funkstationen 11-17 auf Empfang schalten und die jeweiligen Empfangsfeldstärken RSSI an die Zentrale Z übermitteln. Es können mehrere, insbesondere alle Funkstationen 11-17 zyklisch senden, während die jeweils anderen Funkstationen 11-17 auf Empfang schalten.

Ferner trägt diese Person P einen Ausweis mit einem integrierten RFID-Transponder 4 zur möglichen Identifikation durch ein RFID-Lesegerät mit. Gemäss der Erfindung sind die Funkstationen 11-17, zumindest ein Teil davon, wie z.B. jede zweite oder dritte, räumlich verteilt angeordnete Funkstation 11-17, dazu eingerichtet, neben der Ermittlung eines Empfangsfeldstärkewertes RSSI auch einen im jeweiligen Funkerfassungsbereich anwesenden RFID-Transponder 4 auszulesen. Bei diesen RFID-Transponder 4 handelt es sich vorzugsweise um aktiv im Mikrowellenbereich sendende Transponder 4. Derartige Transponder 4 können z.B. zusammen mit einer Batterie auf einer Chipkarte integriert sein. Eine aus dem RFID-Transponder 4 ausgelesene Identifikationskennung ID kann dann an ihrer Datenschnittstelle ausgegeben werden und an die Zentrale Z weitergeleitet werden.

Wegen der guten Absorptionseigenschaft und Beeinflussungseigenschaft, wie z.B. Beugung, des menschlichen Körpers im Frequenzbereich um 2,45 GHz, insbesondere im Bereich von 2,4 GHz bis 2,5 GHz ist, und der Lage dieses Frequenzbandes in einem zugelassenen freien ISM-Frequenzband, ist dieses Frequenzband besonders gut für die Erfassung physisch anwesender Personen und der Erfassung der Identifikationskennungen ID über die RFID-Transponder 4 geeignet.

Die übergeordnete Zentrale Z weist ferner Mittel zur Ausführung eines Computerprogramms auf, welches auf einer entsprechenden prozessorgestützten Verarbeitungseinheit ausgeführt wird.

Dieses Computerprogramm weist geeignete Programmschritte auf, durch welche übergeordnet die übertragenen Feldstärkewerte RSSI der jeweiligen Funkstationen 11-17 erfasst werden können. Mittels aller empfangener Funkfeldstärken RSSI ist, wie in der eingangs genannten Veröffentlichung mit dem Titel "Funkbasierte Monitoring-Systeme zur Raumüberwachung", von Prof. Dr.-Ing. Stefan Witte et al., Lemgo, Germany, beschrieben, mittels geeigneter Programmschritte des Computerprogramms eine RSSI-Matrix rechnerisch erstellbar, auf deren Basis die Anwesenheit sowie die Anzahl CP der physisch anwesenden Personen P ermittelbar ist. Alternativ oder zusätzlich ist aus den jeweiligen zeitlichen Änderungen der Empfangsfeldstärken RSSI eine Bewegungsrichtung von Personen P von und zu den jeweiligen Funkstationen 11-17 ermittelbar.

Das Computerprogramm weist weitere Programmschritte auf, um aus den jeweiligen empfangenen Identifikationskennungen ID eine gesamte Anzahl CID von Identifikationskennungen ID zu ermitteln und gegebenenfalls auszugeben, wie z.B. auf einem Bildschirm.

Insbesondere ist die Zentrale Z dazu eingerichtet, als Indikator für die aktuelle Sicherheitslage fortlaufend die Differenz zwischen den beiden Anzahlen CP, CID zu ermitteln. Die Zentrale Z kann auch dazu eingerichtet sein, eine Meldung WARN auszugeben, wenn die Differenz einen vorgegebenen Vergleichswert, wie z.B. den Wert 0, übersteigt. Die Meldung WARN kann als Warnmeldung zum Beispiel auch auf ein Mobiltelefon eines Wachmanns übertragen werden. Sie kann auch eine weitere Meldung ausgeben, wenn die Anzahl der als ungültig erkannten Identifikationskennungen ID einen vorgegebenen weiteren Vergleichswert, wie z.B. den Wert 0, übersteigt. Weiterhin kann die Zentrale Z sowie die übergeordnete Zentrale dazu eingerichtet sein, den jeweiligen Standort der physisch anwesenden Personen P und/oder den jeweiligen Standort der ausgelesenen RFID-Transponder 4 bzw. Identifikationskennungen ID zu ermitteln und z.B. auf einem Flurplan des Gebäudes zu visualisieren.

Es wird angemerkt, dass auch die gezeigte Zentrale Z zugleich als Funkstation 11-17 im Sinne der vorliegenden Anmeldung ausgebildet sein kann.

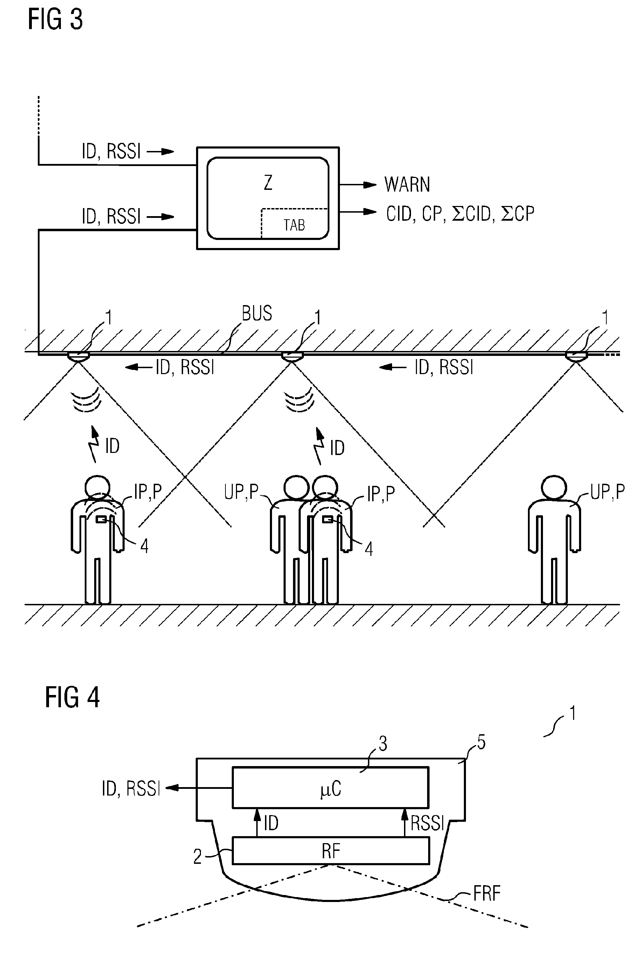

FIG 3 zeigt ein Beispiel für ein System gemäss der Erfindung mit einer verteilten linienförmigen Anordnung von Funkstationen 1 im Deckenbereich. Im oberen Teil der FIG 3 ist eine Zentrale Z zu sehen, welche neben der unteren "Melderlinie" noch an eine weitere Melderlinie zur Erfassung von Identifikationskennungen ID und weiteren Empfangsfeldstärkewerten RSSI aus einem anderen zu überwachenden Aufenthaltsbereich z.B. in einem anderen Teil eines Gebäudes datentechnisch angeschlossen ist. Die Zentrale Z ist dazu eingerichtet, sowohl die jeweilige aktuelle Anzahl CP physisch anwesender Personen P im Sende- und Empfangsbereich der im unteren Teil der FIG 3 gezeigten Funkstationen 1 auf Basis der jeweiligen Empfangsfeldstärken RSSI bzw. Empfangspegel zu ermitteln sowie eine weitere aktuelle Anzahl CP auf Basis von Empfangsfeldstärken RSSI zu ermitteln, die aus dem anderen, nicht weiter gezeigten Aufenthaltsbereich stammen. Mit TAB ist im vorliegenden Fall eine Tabelle bezeichnet, welche alle aktuellen RSSI-Werte von allen Funkstationen 1 enthält. Auf Basis dieser Tabelle TAB kann ein geeignetes Computerprogramm die Ortung und Detektion von Personen mittels eines funktomographischen Verfahrens durchführen.

Weiterhin ist die Zentrale Z dazu eingerichtet, aus den jeweiligen Personenanzahlen CP und den jeweiligen Identifikationskennungsanzahlen CID eine Gesamtpersonenanzahl ΣCP und eine Gesamtidentifikationskennungsanzahl ΣCID zu ermitteln und auszugeben. Im Beispiel der FIG 3 wird für den unteren Aufenthaltsbereich eine Personenanzahl CP von 4 und eine Anzahl CID von Identifikationskennungen ID von 2 ermittelt. Es wird in diesem Fall eine Warnung WARN ausgegeben, da die Differenz der beiden Anzahlen CP, CID als Indikator für eine geänderte Sicherheitslage in dem Gebäude einen vorgegebenen Vergleichswert, z.B. von Null, übersteigt.

FIG 4 zeigt den Aufbau einer beispielhaften Funkstation 1 in der Funktion als RFID-Lesegerät und als Teil eines Ortungs- und Detektionssystems für Personen P auf Basis von Funkfeldbeeinflussungen.

Mit dem Bezugszeichen 2 ist ein Funkmodul, insbesondere eine Funksende-/empfangseinheit bezeichnet, welches zur Erfassung von Identifikationskennungen ID sowie zur Ausgabe eines aktuell ermittelten Empfangsfeldstärkewertes RSSI eingerichtet ist. Die Funksende-/empfangseinheit 2 ist vorzugsweise zum Betrieb im Mikrowellenbereich, insbesondere im 2,4 bis 2,5 GHz-Frequenzband, eingerichtet. Die empfangene Identifikationskennung ID sowie der aktuelle Empfangsfeldstärkewert RSSI werden an eine angeschlossene Verarbeitungseinheit 3, wie z.B. an einen Mikrocontroller, weitergeleitet. Auf Basis eines geeigneten Softwareprogramms, welches auf dem Mikrocontroller 3 ausgeführt wird, werden die beiden Daten ID, RSSI an eine übergeordnete Zentrale Z zur Weiterverarbeitung weitergeleitet. Mit FRF ist der Funkerfassungsbereich des Funkmoduls 2 bezeichnet. Mit 5 ist ferner ein für Mikrowellen durchlässiges Gehäuse bezeichnet, in welchem die Komponenten 2, 3 der Funkstation 1 untergebracht sind. Das Gehäuse 5 ist z.B. an die Formgebung herkömmlicher Brand- oder Rauchmelder angelehnt.

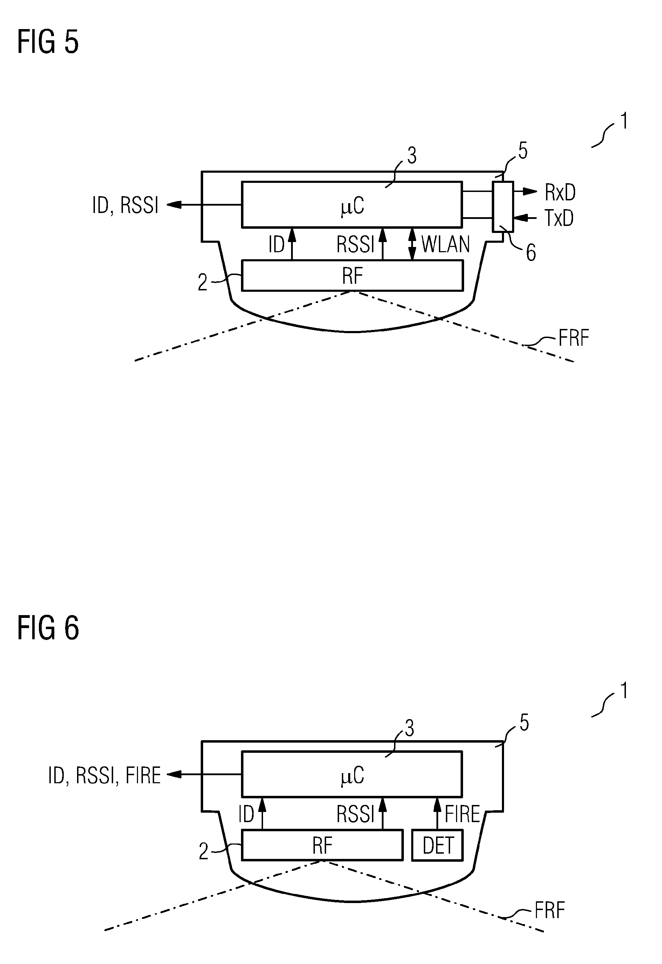

FIG 5 zeigt den Aufbau einer beispielhaften erfindungsgemässen Funkstation 1 gemäss einer zweiten Ausführungsform.

Im Vergleich zur vorherigen Ausführungsform ist die Funkstation 1 zusätzlich als WLAN-Funkstation 1 eingerichtet. Mit WLAN sind die Sende- und Empfangsdaten bezeichnet. Mit dem Bezugszeichen 6 ist eine Datenschnittstelle, insbesondere eine LAN-Schnittstelle zum Anschliessen der Funkstation 1 an einen Netzwerkknoten bezeichnet. Der Netzwerkknoten ist typischerweise ein Internet- und/oder ein Intranet-Netzwerkknoten. Die Verarbeitungseinheit 3 übernimmt im vorliegenden Beispiel das Management des Datenverkehrs vom Netzwerkknoten zum Funkmodul 2 und umgekehrt für die Sende- und Empfangsdaten WLAN. Mit RxD sind Lesedaten bezeichnet, die an den Netzknoten ausgegeben werden und von einem im Funkerfassungsbereich FRF anwesenden, nicht weiter gezeigten WLAN-Teilnehmer stammen können. Mit TxD sind Sendedaten bezeichnet, die vom Netzwerkknoten stammen und über das Funkmodul 2 an den WLAN-Teilnehmer ausgegeben werden können. Die Datenkommunikation über WLAN erfolgt vorzugsweise im 2,4 bis 2,5 GHz-Frequenzband oder auch im 5 GHz-Frequenzband.

FIG 6 zeigt den Aufbau einer beispielhaften erfindungsgemässen Funkstation 1 gemäss einer dritten Ausführungsform. Im Vergleich zur vorherigen Ausführungsform weist die Funkstation 1 zusätzlich eine Detektionseinheit DET zur Detektion von Rauch-, Rauch- oder Brandgaspartikeln auf. Vorzugsweise ist das Gehäuse einer derartigen Funkstation 1 das eines bereits bekannten Brand- oder Rauchmelders, welches bereits die für die Brand- und Rauchdetektion erforderlichen Gehäuseöffnungen aufweist. Die Detektionseinheit DET gibt, wie im vorliegenden Beispiel, eine Alarm- oder Warnmeldung FIRE an die Verarbeitungseinheit 3 im detektierten Brandfall aus. Die Verarbeitungseinheit 3 kann dieses Ereignis z.B. über das Funkmodul 2 an eine Gefahrenmeldezentrale ausgeben oder an einen angeschlossenen, nicht weiter gezeigten Brandmelderbus.

Ergänzend wird angemerkt, dass die Funkstation 1 natürlich auch eine Kombination aus beiden Ausführungsformen gemäss FIG 5 und FIG 6 sein kann. Eine solche Funkstation 1 ist sowohl Teil eines Ortungs- und Detektionssystems auf der Basis von Funkfeldbeeinflussungen, als auch ein RFID-Lesegerät, eine WLAN-Funkstation bzw. WLAN-Router, und Brand- oder Rauchmelder in einem.

### Bezugszeichenliste

- 1, 11-19: Funkstation, WLAN-Funkstation
- 2: Funkmodul, Funksende-/empfangseinheit, WLAN-Modul
- 3: elektronische Verarbeitungseinheit, Mikrocontroller
- 4: Ausweis mit RFID-Transponder, Badge
- 5: Gehäuse
- 100: Gebäude

- BUS: Informationsbus, Datenbus, Melderbus, Brandmelderbus
- CID: Anzahl der Identifikationskennungen
- CP: Personenanzahl
- DET: Detektor, Rauchdetektor, Feuerdetektor, Gasdetektor
- FIRE: Detektorsignal
- FRF: Funkerfassungsbereich
- ID: Identifikationskennung
- IP: berechtigte Person
- P: Person
- RSSI: Funkfeldstärkesignal
- S1-S6: Verfahrenschritte
- UP: Unberechtigte Person
- WARN: Warnmeldung
- TAB: Tabelle, RSSI-Matrix
- v: Geschwindigkeit
- Z: Zentrale
- ΣCID: Gesamtidentifikationskennungsanzahl
- ΣCP: Gesamtpersonenanzahl

## Patentansprüche

1. Verfahren zur Bewertung der Sicherheitslage in einem Gebäude (100), wobei das Gebäude (100) Aufenthaltsbereiche mit Zugangsberechtigung für berechtigte Personen (IP) aufweist,
- wobei eine blosse aktuelle Anzahl (CP) physisch anwesender Personen (P) in zumindest einem Teilbereich der Aufenthaltsbereiche ermittelt wird, indem in einem Funknetzwerk, welches mehrere im Decken-, Wand- oder Bodenbereich verteilt angeordnete Funkstationen (1) aufweist, die Funkfeldbeeinflussung dieser Funkstationen (1) untereinander durch dort physisch anwesende Personen (P) ausgewertet wird, insbesondere mittels eines funktomographischen Ortungs- und Detektionsverfahrens,
- wobei jeweils eine aktuelle Anzahl (CID) von Identifikationskennungen (ID) ermittelt wird, welche mittels RFID-Lesegeräten (2) von RFID-Transpondern (4) ausgelesen werden, wobei die Identifikationskennungen (ID) bestimmungsgemäss von berechtigten Personen (IP) mitgeführt werden und wobei die RFID-Lesegeräte (2) dort gleichfalls im Decken-, Wand- oder Bodenbereich verteilt angeordnet sind, und
- wobei auf Basis der jeweiligen Personenidentifikationskennungsanzahlen (CID) und der aktuell ermittelten Personenanzahl (CP) ein Indikator zur Bewertung der aktuellen Sicherheitslage im Gebäude (100) ermittelt und ausgegeben wird.

2. Verfahren nach Anspruch 1, wobei übergeordnet eine aktuelle Gesamtpersonenanzahl (ΣCP) auf Basis der Funkfeldbeeinflussung durch anwesende Personen in mehreren, insbesondere sich überlappenden Funknetzwerken ermittelt wird und wobei übergeordnet eine aktuelle Gesamtidentifikationskennungsanzahl (ΣCID) auf Basis aller dort erfassbaren Identifikationskennungen (ID) ermittelt wird.

3. Verfahren nach Anspruch 1 oder 2, wobei als Indikator für die Sicherheitslage fortlaufend die Differenz zwischen den beiden jeweiligen Anzahlen (CP, CID) und/oder zwischen den beiden Gesamtanzahlen (ΣCP, ΣCID) ermittelt wird und wobei gegebenenfalls eine Meldung (WARN) ausgegeben wird, wenn die jeweilige Differenz einen vorgegebenen Vergleichswert übersteigt.

4. Verfahren nach Anspruch 3, wobei eine weitere Meldung ausgegeben wird, wenn die Anzahl der als ungültig erkannten Identifikationskennungen (ID) einen vorgegebenen weiteren Vergleichswert übersteigt.

5. Verfahren nach einem der vorherigen Ansprüche, wobei der jeweilige Standort der physisch anwesenden Personen (P) in einem Funknetzwerk und/oder der jeweilige Standort der ausgelesenen RFID-Transponder (4) ermittelt und ausgegeben wird.

6. Verfahren nach einem der vorherigen Ansprüche, wobei zumindest ein Teil der jeweiligen Funkstationen (1) eines Funknetzwerkes zugleich die Funktion eines RFID-Lesegeräts (2) mit übernehmen.

7. Verfahren nach Anspruch 6, wobei die jeweiligen Funkstationen (1) dazu eingerichtet sind, zur Ermittlung der Anzahl (CP) der im Funknetzwerk physisch anwesenden Personen (P) in einem Mikrowellenfrequenzbereich zu senden, insbesondere in einem Frequenzbereich um 2,45 GHz.

8. Verfahren nach Anspruch 6 oder 7, wobei die jeweiligen Funkstationen (1) dazu eingerichtet sind, zum kontaktlosen Auslesen von RFID-Transpondern (4) in einem Mikrowellenfrequenzbereich zu senden, insbesondere in einem ISM-Frequenzbereich um 2,45 GHz, um 5,8 GHz, um 433 MHz, um 868 MHz oder um 915 MHz.

9. Verfahren nach einem der vorherigen Ansprüche, wobei zumindest ein Teil der Funkstationen (1) zugleich eine WLAN-Funkstation ist, eingerichtet zum Sende- und Empfangsbetrieb insbesondere im 2,4 GHz-Frequenzband oder im 5 GHz-Frequenzband.

10. Verfahren nach Anspruch 9, wobei die jeweilige WLAN-Funkstation (1) zugleich die Funktion eines Routers zum Weiterleiten von Funkdaten an zumindest eine in Funkreichweite befindliche weitere WLAN-Funkstation (1) und/oder an einen in Funkreichweite befindlichen weiteren WLAN-Router aufweist.

11. Anwendung des Verfahrens nach einem der vorherigen Ansprüche zum Detektieren und Lokalisieren von Personen (P) mit fehlender, nicht auslesbarer oder ungültiger Identifikationskennung (ID).

12. System zur Bewertung der Sicherheitslage in einem Gebäude (100), wobei das Gebäude (100) Aufenthaltsbereiche mit Zugangsberechtigung für berechtigte Personen (IP) aufweist,
- wobei das System eine Mehrzahl von Funkstationen (1) aufweist, wobei die Funkstationen (1) Teil eines Funknetzwerkes sind, wobei die jeweilige Funkstation (1) zum Senden und Empfangen von Funksignalen eingerichtet ist, wobei die jeweilige Funkstation (1) eine erste Datenschnittstelle zum Ausgeben eines aktuellen Empfangsfeldstärkewertes (RSSI) der Funkstation (1) aufweist, wobei die jeweilige Funkstation (1) zugleich zum kontaktlosen Auslesen von Identifikationskennungen (ID) von sich im Funkerfassungsbereich (FRF) der jeweiligen Funkstation (1) befindlichen RFID-Transpondern (4) im Sinne eines RFID-Lesegeräts eingerichtet ist, und wobei die jeweilige Funkstation (1) zum Ausgeben der erfassten Identifikationskennungen (ID) und/oder der aktuellen Anzahl (CID) der Identifikationskennungen (ID) an der ersten Datenschnittstelle eingerichtet ist,
- wobei das System eine übergeordnete, signal- oder datentechnisch mit den Funkstationen (1) verbundene Zentrale (Z) aufweist, und
- wobei die Zentrale (Z) dazu eingerichtet ist, auf Basis der von den jeweiligen Funkstationen (1) empfangenen Identifikationskennungen (ID) eine aktuelle Anzahl (CID) von Identifikationskennungen (ID) zu ermitteln, auf Basis der von den jeweiligen Funkstationen (1) empfangenen Empfangsfeldstärkewerten (RSSI), insbesondere mittels eines funktomographischen Ortungs- und Detektionsverfahrens, eine aktuelle Personenanzahl (CP) physisch anwesender Personen (P) zu ermitteln, und auf Basis dieser beiden Anzahlen (CID, CP) einen Indikator zur Bewertung der aktuellen Sicherheitslage im Gebäude (100) zu ermitteln und auszugeben.

13. System nach Anspruch 12, wobei die jeweilige Funkstation (1) eine WLAN-Funkstation ist und wobei die jeweilige WLAN-Funkstation (1) eine zweite Datenschnittstelle zum Empfang von zu sendenden Funkdaten (TxD) und zum Ausgeben von empfangenen Funkdaten (RxD) an der zweiten Datenschnittstelle aufweist.

14. System nach Anspruch 12 oder 13, wobei die jeweilige Funkstation (1) eine dritte Datenschnittstelle aufweist, wobei die jeweilige Funkstation (1) eine Detektionseinheit (DET) zur Detektion von Rauch-, Rauch- oder Brandgaspartikeln und zur Ausgabe eines von der Detektionseinheit (DET) gebildeten Detektionswertes (AL) und/oder einer daraus abgeleiteten Messgrösse als Mass für die Konzentration von detektierten Rauch-, Brand- oder Brandgaspartikeln und/oder zum Ausgeben einer daraus abgeleiteten Alarm- oder Warnmeldung (FIRE) an der dritten Datenschnittstelle aufweist, und wobei die jeweilige Funkstation (1) zur Ausgabe des Detektionswertes und/oder der daraus abgeleiteten Messgrösse als Mass für die Konzentration von detektierten Rauch-, Brand- oder Brandgaspartikeln und/oder der daraus abgeleiteten Alarm- oder Warnmeldung (FIRE) an die dritte Datenschnittstelle eingerichtet ist.

15. System nach einem der Ansprüche 12 bis 14, wobei die Zentrale (Z) dazu eingerichtet ist, als Indikator für die Sicherheitslage fortlaufend die Differenz zwischen den beiden Anzahlen (CP, CID) zu ermitteln und gegebenenfalls eine Meldung (WARN) auszugeben, wenn die jeweilige Differenz einen vorgegebenen Vergleichswert übersteigt.

16. System nach einem der Ansprüche 12 bis 15, wobei die Zentrale (Z) dazu eingerichtet ist, eine weitere Meldung auszugeben, wenn die Anzahl der als ungültig erkannten Identifikationskennungen (ID) einen vorgegebenen weiteren Vergleichswert übersteigt.

17. System nach einem der Ansprüche 12 bis 16, wobei die Zentrale (Z) dazu eingerichtet ist, einen jeweiligen Standort der physisch anwesenden Personen (P) und/oder den jeweiligen Standort der ausgelesenen RFID-Transponder (4) zu ermitteln und auszugeben.

18. System nach einem der Ansprüche 12 bis 17, zusätzlich aufweisend eine mit den Funkstationen (1) signal- oder datentechnisch verbundene Gefahrenmeldezentrale, wobei die Gefahrenmeldezentrale zur übergeordneten Erfassung des von den jeweiligen Funkstationen (1) übermittelten Detektionswertes und/oder der daraus abgeleiteten Alarm- oder Warnmeldung (FIRE) eingerichtet ist.

19. System nach Anspruch 18, wobei die übergeordnete Zentrale (Z) und die Gefahrenmeldezentrale eine gemeinsame Zentrale als Baueinheit bilden.

20. System nach einem der Ansprüche 12 bis 19, wobei das System eine Mehrzahl von WLAN-Funkstationen (1) nach Anspruch 13 oder 14 aufweist, wobei die WLAN-Funkstationen (1) ein WLAN-Funknetzwerk mit Routerfunktion bilden und wobei zumindest eine der WLAN-Funkstationen (1) datentechnisch mit einem Internet- und/oder Intranet-Netzwerkknoten verbunden ist.

## Claims

1. Method for evaluating the security situation in a building (100), the building (100) having accommodation areas with access authorisation for authorised persons (IP),
- wherein a mere current count (CP) of the persons (P) physically present in at least a partial region of the accommodation areas is determined in that, in a radio network which has a plurality of radio stations (1) arranged spatially distributed in the ceiling, wall or floor region, the influencing of the radio field of said radio stations (1) between one another by persons (P) physically present there is evaluated, in particular by means of a radio tomographic location and detection method,
- wherein in each case, a current count (CID) of identifiers (ID) which are read by RFID reading devices (2) of RFID transponders (4) is determined, the identifiers (ID) being carried by authorised persons (IP) in compliance with regulations and the RFID reading devices (2) also being arranged there spatially distributed in the ceiling, wall or floor region, and
- wherein, based on the respective counts (CID) of personal identifiers and the currently determined person count (CP), an indicator for evaluating the current security situation in the building (100) is determined and output.

2. Method according to claim 1, wherein a current total person count (ΣCP) is determined at a higher level based on the influencing of the radio field by persons present, in a plurality of, in particular overlapping, radio networks and wherein a current total identifier count (ΣCID) is determined at a higher level based on all the identifiers (ID) detectable there.

3. Method according to claim 1 or 2, wherein the difference between the two counts (CP, CID) and/or between the two total counts (ΣCP, ΣCID) is determined continuously as an indicator for the security situation and wherein, if appropriate, a signal (WARN) is output if the difference in any case exceeds a pre-determined comparison value.

4. Method according to claim 3, wherein a further signal is output if the count of identifiers (ID) recognised as being non-valid exceeds a pre-determined further comparison value.

5. Method according to one of the preceding claims, wherein the location of each physically present person (P) in a radio network and/or the location of each read RFID transponder (4) is determined and output.

6. Method according to one of the preceding claims, wherein at least part of the radio stations (1) of a radio network simultaneously assumes the function of an RFID reading device (2).

7. Method according to claim 6, wherein each radio station (1) is configured, in order to determine the count (CP) of persons (P) physically present in the radio network, to transmit in a microwave frequency range, in particular, in a frequency range around 2.45 GHz.

8. Method according to claim 6 or 7, wherein each radio station (1) is configured, for contactlessly reading RFID transponders (4), to transmit in a microwave frequency range, in particular, an ISM frequency range around 2.45 GHz, around 5.8 GHz, around 433 MHz, around 868 MHz or around 915 MHz.

9. Method according to one of the preceding claims, wherein at least part of the radio stations (1) is simultaneously a WLAN radio station, configured for transmit and receive operation, particularly in the 2.4 GHz frequency band or in the 5 GHz frequency band.

10. Method according to claim 9, wherein each WLAN radio station (1) simultaneously has the function of a router for passing on radio data to at least one further WLAN radio station (1) within radio range and/or to a further WLAN router situated within radio range.

11. Use of the method according to one of the preceding claims for detecting and locating persons (P) with missing, non-readable or non-valid identifiers (ID).

12. System for evaluating the security situation in a building (100), the building (100) having accommodation areas with access authorisation for authorised persons (IP),
- the system having a plurality of radio stations (1), the radio stations (1) being part of a radio network, wherein each radio station (1) is configured for receiving and transmitting radio signals, each radio station (1) having a first data interface for outputting a current received field strength value (RSSI) of the radio station (1), each radio station (1) also being configured for contactlessly reading out identifiers (ID) from RFID transponders (4) located in the radio detection region (FRF) of the radio station (1), in the manner of an RFID reading device, and wherein the radio station (1) is configured for outputting at the first data interface the detected identifiers (ID) and/or the current count (CID) of identifiers (ID),
- wherein the system has a higher-level central unit (Z) which is connected for signal or data exchange with the radio stations (1), and
- wherein the central unit (Z) is configured, based on the identifiers (ID) received by each radio station (1), to determine a current count (CID) of identifiers (ID), based on the field strength values (RSSI) received by each radio station (1), in particular by means of a radio tomographic location and detection method, to determine a current person count (CP) of persons (P) physically present and, based on these two counts (CID, CP) to determine and output an indicator for evaluating the current security situation in the building (100).

13. System according to claim 12, wherein each radio station (1) is a WLAN radio station (1) and wherein each WLAN radio station (1) has a second data interface for receiving radio data (TxD) to be transmitted and for outputting received radio data (RxD) at the second data interface.

14. System according to claim 12 or 13, wherein each radio station (1) has a third data interface, wherein each radio station (1) also has a detection unit (DET) for detecting smoke, smoke particles or combustion gas particles and for outputting a detection value (AL) formed by the detection unit (DET) and/or a measurement variable derived therefrom as a measure of the concentration of detected smoke, fire or combustion gas particles and/or to output an alarm or warning signal (FIRE) derived therefrom to the third data interface, and wherein each radio station (1) is configured to output the detection value and/or the measurement variable derived therefrom as a measure of the concentration of detected smoke, fire or combustion gas particles and/or to output an alarm or warning signal (FIRE) derived therefrom to the third data interface.

15. System according to one of claims 12 to 14, wherein the central unit (Z) is configured to determine continuously the difference between the two counts (CP, CID) as an indicator for the security situation and, where appropriate, to output a signal (WARN) if the difference in any case exceeds a pre-determined comparison value.

16. System according to one of claims 12 to 15, wherein the central unit (Z) is configured to output a further signal if the count of identifiers (ID) recognised as being non-valid exceeds a further pre-determined comparison value.

17. System according to one of the claims 12 to 16, wherein the central unit (Z) is configured to determine and output a location of each physically present person (P) and/or the location of each read RFID transponder (4).

18. System according to one of the claims 12 to 17, additionally having a danger signalling central unit, wherein the danger signalling central unit is configured for higher-level detection of the detection value and/or the alarm or warning signal (FIRE) derived therefrom which have been transmitted by each radio station (1).

19. System according to claim 18, wherein the higher-level central unit (Z) and the danger signalling central unit constitute a common central unit as one component.

20. System according to one of the claims 12 to 19, wherein the system has a plurality of WLAN radio stations (1) according to claim 13 or 14, wherein the WLAN radio stations (1) constitute a WLAN radio network with a router function and wherein at least one of the WLAN radio stations (1) is connected for data exchange to an internet and/or an intranet network node.

## Revendications

1. Procédé d'évaluation de la situation en matière de sécurité dans un bâtiment (100), dans lequel le bâtiment (100) présente des zones de séjour avec autorisation d'accès pour personnes autorisées (IP),
- dans lequel un simple nombre actuel (CP) de personnes physiquement présentes (P) dans au moins une zone partielle des zones de séjour est déterminé par l'évaluation au sein d'un réseau local sans fil, lequel présente plusieurs stations sans fil (1) réparties dans le plafond, les murs ou le sol, de l'influence du champ hertzien de ces stations sans fil (1) entre eux par des personnes physiquement présentes (P) à cet endroit, en particulier au moyen d'un procédé de détection et de localisation radiotomographique,
- dans lequel un nombre actuel (CID) d'identifications (ID) est respectivement déterminé, lesquelles sont lues au moyen de lecteurs RFID (2) de transpondeurs RFID (4), les identifications (ID) étant, conformément aux dispositions, portées par des personnes autorisées (IP) et dans lequel les lecteurs RFID (2) y sont également répartis dans les plafonds, murs ou sols, et
- dans lequel sur la base des nombres d'identifications de personnes respectifs (CID) et du nombre de personnes déterminé actuellement (CP) un indicateur d'évaluation et la situation actuelle en matière de sécurité dans le bâtiment (100) est déterminé et émis.

2. Procédé selon la revendication 1, dans lequel à un échelon supérieur, d'un nombre de personnes total actuel (ΣCP) est déterminé sur la base de l'influence du champ hertzien par les personnes présentes au sein de plusieurs réseaux locaux sans fil, en particulier qui se chevauchent, et dans lequel à un échelon supérieur d'un nombre d'identifications total actuel (ΣCID) est déterminé sur la base de l'ensemble des identifications (ID) saisissables à cet endroit.

3. Procédé selon la revendication 1 ou 2, dans lequel la différence entre les deux nombres respectifs (CP, CID) et/ou entre les deux nombres totaux respectifs (ΣCP, (ΣCID) est déterminée en permanence comme indicateur de la situation en matière de sécurité et dans lequel un signal (WARN) est le cas échéant émis lorsque la différence respective excède une valeur de référence déterminée au préalable.

4. Procédé selon la revendication 3, dans lequel un signal supplémentaire est émis lorsque le nombre d'identifications (ID) détectées comme étant invalides excède une valeur de référence supplémentaire déterminée au préalable.

5. Procédé selon l'une des revendications précédentes, dans lequel l'emplacement respectif des personnes physiquement présentes (P) dans un réseau local sans fil et/ou l'emplacement respectif des transpondeurs RFID lus (4) est déterminé et émis.

6. Procédé selon l'une des revendications précédentes, dans lequel au moins une partie des stations sans fil respectives (1) d'un réseau local sans fil assument en même temps la fonction d'un lecteur RFID (2).

7. Procédé selon la revendication 6, dans lequel les stations sans fil respectives (1) sont aménagées, pour déterminer le nombre (CP) de personnes physiquement présentes (P) dans le réseau local sans fil, afin d'émettre dans une plage de micro-ondes, en particulier dans une plage de fréquences aux alentours de 2,45 GHz.

8. Procédé selon la revendication 6 ou 7, dans lequel les stations sans fil respectives (1) sont aménagées, pour la lecture sans contact de transpondeurs RFID (4), afin d'émettre dans une plage de micro-ondes, en particulier dans une plage de fréquences ISM aux alentours de 2,45 GHz, aux alentours de 5,8 GHz, aux alentours de 433 MHz, aux alentours de 868 MHz ou aux alentours de 915 MHz.

9. Procédé selon l'une des revendications précédentes, dans lequel au moins une partie des stations sans fil (1) est en même temps une station sans fil WLAN, aménagée afin d'envoyer et de recevoir en particulier dans la banque de fréquences de 2,4 GHz ou dans la bande de fréquences de 5 GHz.

10. Procédé selon la revendication 9, dans lequel la station sans fil WLAN respective (1) présente en même temps la fonction d'un routeur pour la transmission de données radio à au moins une station sans fil WLAN supplémentaire (1) se trouvant dans la portée sans fil et/ou à un routeur WLAN supplémentaire se trouvant dans la portée sans fil.

11. Utilisation du procédé selon l'une des revendications précédentes pour détecter et localiser des personnes (P) possédant une identification (ID) faisant défaut, illisible ou invalide.

12. Système d'évaluation de la situation en matière de sécurité dans un bâtiment (100), dans lequel le bâtiment (100) présente des zones de séjour avec autorisation d'accès pour personnes autorisées (IP),
- dans lequel le système présente une pluralité de stations sans fil (1), dans lequel les stations sans fil (1) font partie d'un réseau sans fil, dans lequel la station sans fil respective (1) est aménagée afin d'envoyer et de recevoir des signaux radio, dans lequel la station sans fil respective (1) présente une première interface de données pour l'émission d'une valeur d'intensité de champ de réception actuelle (RSSI) de la station sans fil (1), dans lequel la station sans fil respective (1) est en même temps aménagée pour la lecture sans contact d'identifications (ID) de transpondeurs RFID (4) se trouvant dans la plage de perception sans fil (FRF) de la station sans fil respective (1) dans le sens d'un lecteur RFID, et dans lequel la station sans fil respective (1) est aménagée afin d'émettre les identifications saisies (ID) et/ou le nombre actuel (CID) des identifications (ID) à la première interface de données,
- dans lequel le système présente, à un échelon supérieur d'une centrale (Z) reliée aux stations sans fil (1) sur le plan de la technique des données ou du signal, et
- dans lequel la centrale (Z) est aménagée afin de déterminer et d'émettre, sur la base des identifications (ID) reçues par les stations sans fil respectives (1), un nombre actuel (CID) d'identifications (ID), de déterminer et d'émettre, sur la base des valeurs d'intensité de champ de réception actuelles (RSSI) reçues par les stations sans fil respectives (1), en particulier au moyen d'un procédé de localisation et de détection radiotomographique, un nombre actuel de personnes (CP) physiquement présentes (P), et de déterminer et d'émettre, sur la base de ces deux nombres (CID, CP) un indicateur quant à l'évaluation de la situation actuelle en matière de sécurité dans le bâtiment (100).

13. Système selon la revendication 12, dans lequel la station sans fil respective (1) est une station sans fil WLAN et dans lequel la station sans fil WLAN respective (1) présente une deuxième interface de données pour la réception de données radio à envoyer (TxD) et pour l'émission de données radio reçues (RxD) en direction de la deuxième interface de données.

14. Système selon la revendication 12 ou 13, dans lequel la station sans fil respective (1) présente une troisième interface de données, dans lequel la station sans fil respective (1) présente une unité de détection (DET) pour la détection de particules de fumée ou de gaz d'incendie et pour l'émission d'une valeur de détection (AL) constituée par l'unité de détection (DET) et/ou d'une grandeur de mesure qui en est déduite comme mesure pour la concentration des particules de fumée ou de gaz d'incendie détectées et/ou pour l'émission d'un signal d'alarme ou de mise en garde (FIRE) qui en est déduit en direction de la troisième interface de données, et dans lequel la station sans fil respective (1) est aménagée afin d'émettre la valeur de détection et/ou la grandeur de mesure qui en est déduite sous forme de mesure pour la concentration des particules de fumée ou de gaz d'incendie détectées et/ou pour l'émission d'un signal d'alarme ou de mise en garde (FIRE) qui en est déduit en direction de la troisième interface de données.

15. Système selon l'une des revendications 12 à 14, dans lequel la centrale (Z) est aménagée afin de déterminer sous forme d'indicateur de la situation en matière de sécurité en permanence la différence entre les deux nombres (CP, CID) et à émettre le cas échéant un signal (WARN) lorsque la différence respective excède une valeur de référence déterminée au préalable.

16. Système selon l'une des revendications 12 à 15, dans lequel la centrale (Z) est aménagée afin d'émettre un signal supplémentaire lorsque le nombre d'identifications détectées comme étant invalides (10) excède une valeur de référence supplémentaire déterminée au préalable.

17. Système selon l'une des revendications 12 à 16, dans lequel la centrale (Z) est aménagée afin de déterminer et d'émettre un emplacement respectif des personnes physiquement présentes (P) et/ou l'emplacement respectif des transpondeurs RFID (4) lus.

18. Système selon l'une des revendications 12 à 17, présentant en outre une centrale d'indication de danger reliée aux stations sans fil (1) sur le plan de la technique des données ou du signal, dans lequel la centrale d'indication de danger est aménagée en vue de la saisie à un échelon supérieur de la valeur de détection transmise par les stations sans fil respectives (1) et/ou du signal d'alarme ou de mise en garde (FIRE) qui en est déduit.

19. Système selon la revendication 18, dans lequel la centrale d'échelon supérieur (Z) et la centrale d'indication de danger constituent une centrale commune sous la forme d'un élément.

20. Système selon l'une des revendications 12 à 19, dans lequel le système présente une pluralité de stations sans fil WLAN (1) selon la revendication 13 ou 14, dans lequel les stations sans fil WLAN (1) constituent un réseau local sans fil WLAN avec fonction de routeur et dans lequel au moins une des stations sans fil WLAN (1) est reliée sur le plan de la technique des données avec un noeud de réseau Internet et/ou Intranet.
